# EUROPÄISCHE PATENTANMELDUNG

(11) **EP 0 579 348 A1**
(43) Veröffentlichungstag der Anmeldung: **19.01.1994**
(21) Anmeldenummer: 93250196.8
(22) Anmeldetag: 05.07.1993
(51) Int. Cl.: B29B 13/02

(54) **Schmelzanlage für thermoplastische Stoffe**

(30) Priorität: 17.07.1992 DE 4224197
(71) Anmelder: WALTER HOFMANN GmbH, MASCHINENFABRIK UND VERTRIEB, D-25462 Rellingen (DE)
(72) Erfinder: Hofmann, Frank, D-22609 Hamburg (DE)

(57) **Zusammenfassung**

Eine Schmelzanlage für themoplastische Stoffe, mit einem zur Aufnahme von Schmelzgut (2) dienenden Schmelzgefäß (1) ausgerüstet und von einem Ölbad (3) umgeben ist, weist neben dem Ölbad (3) ein in der Höhe verstellbarer Ausgleichgefäß (5) auf, dessen unteres Ende über eine flexible Ausgleichleitung (6) mit dem Bodenbereich des Ölbades (3) verbunden ist und dessen oberes Ende über eine flexible Gasausgleichleitung (7) mit dem oberen Ende des Ölbades (3) in Strömungsverbindung steht.

## Beschreibung

Die Erfindung betrifft über Wärmeübertragungsflüssigkeiten beheizte Schmelzanlagen für thermoplastische Stoffe, bei denen sich das Schmelzgefäß in einem Bad aus Wärmeübertragungsflüssigkeit, nachfolgend nur noch Thermalöl und demnach je nach Konstruktion vollständig oder teilweise von Thermalöl umgeben ist. Das Thermalölbad wiederum wird meistens durch Gas- oder Ölbrenner beheizt, die auf im unteren Bereich des Ölbades angeordnete Heizflächen wirken oder aber dem Thermalölbad wird heißes Öl aus einem separaten Erhitzer zugeführt und gleichzeitig abgekühltes Öl entnommen (Kreislauf).

Zwecks optimaler Wärmeübertragung auf das Schmelzgut bei maximaler Befüllung reicht in der Regel das Niveau des Thermalölbades bis an das maximale Schmelzgutniveau heran, was andererseits einige gravierende Nachteile mit sich bringt. Ist nämlich das Schmelzgefäß nur teilgefüllt oder sinkt nach Entnahme von Schmelzgut der Füllstand ab, wird der über den Schmelzgutfüllstand hinausragende Bereich des Schmelzgefäßes beheizt, ohne daß die Wärme an das Schmelzgut weitergegeben wird. Hierdurch entstehen größere Energieverluste, und zwar nicht nur durch Wärmeabgabe an den Luftraum oberhalb des Schmelzgutniveaus sondern auch durch Wärmeabgabe durch die Außenwandung des Ölbades in diesem Bereich.

Unangenehmer als die größeren Wärmeverluste ist die Tatsache, daß die nach einem Absenken des Schmelzgutniveaus an der Wandung zurückbleibende dünne Schmelzgutschicht, die nicht mehr durch Schmelzgutumwälzung infolge von Rührwerkstätigkeit ständig ausgetauscht wird, sofort die hohe Wandtemperatur annimmt und dieser lange Zeit ausgesetzt bleibt. Durch Ausdampfen flüchtiger Bestandteile trocknet dieses Schmelzgut rasch aus und je nach thermischer Stabilität kommt es infolge des ungehinderten Zutritts von Luftsauerstoff zur Zersetzung des Schmelzgutes, was in der Regel Krustenbildung bedeutet.

Und dies ist um so eher der Fall, je höher die Thermalöltemperatur ist. Höhere Thermalöltemperaturen als für eine dünne Schmelzgutschicht über längere Zeit verträglich sind in der täglichen Praxis die Regel, da zum einen von vornherein zur Beschleunigung des Schmelzvorgangs eine über der gewünschten Endschmelztemperatur liegende Thermalöltemperatur eingestellt wird und zum anderen sich infolge des Auftriebes des an den Brennerheizflächen erhitzten Öles im oberen Bereich des Ölbades das höchste Temperaturniveau darstellt, gerade dort, wo die negativen Wirkungen von hohen Öltemperaturen am nachteilhaftesten sind.

Während Wärmeverluste höheren Energieeinsatz nach sich ziehen, erfordert Krustenbildung regelmäßige, zeitaufwendige und unangenehme Reinigungsarbeiten. Von Schmelzgutcharge zu Schmelzgutcharge wachsende Krusten müssen nämlich entfernt werden bevor sie sich - eventuell sogar vom Rührwerk erfaßt - von selbst lösen und in die Schmelze gelangen, was in der Regel vermieden werden muß.

Es ist **Aufgabe** der Erfindung, die beschriebenen ungünstigen Wirkungen dadurch zu eliminieren, daß das Niveau des Thermalöles im Heizbad dem Schmelzgutniveau angepaßt wird, so daß die Schmelzgefäßwandungen und die Außenwandungen des Heizbades oberhalb des Schmelzgutniveaus nicht mit Thermalöl beaufschlagt werden, und daß andererseits die Wärmeübertragung vom Öl auf das Schmelzgut nicht durch ein unterhalb des Schmelzgutniveaus befindliches Thermalölniveau verringert wird.

Zur **Lösung** dieser Aufgabe dient eine Schmelzanlage mit den Merkmalen des Patentanspruchs 1.

Gemäß Erfindung läßt sich das Schmelzgefäß also gegenüber dem Ölbadgefäß in vertikaler Richtung verschiebbar ausführen. Bei Verschiebung nach unten steigt das Thermalölniveau durch die Verdrängerwirkung des Schmelzgefäßes an und bei Verschiebung nach oben sinkt das Ölniveau ab. Mit anderen Worten zeichnet sich die Erfindung dadurch aus, daß die Schmelzanlage relativ zueinander verschiebbare, einen Höhenunterschied zwischen Oberfläche und Schmelzwannenboden vergrößernde bzw. verkleinernde, das Gesamtvolumen des Öles nicht ändernde Anlagenteile aufweist.

Bei nicht verschiebbarem Schmelzgefäß kann nach einer weiteren Ausgestaltung der Erfindung das Ölniveau durch vertikales Verschieben von im Öl eintauchenden Verdrängungskörpern beeinflußt werden.

Bei der bevorzugten Ausgestaltung der Erfindung wird die Anpassung des Ölniveaus an das Schmelzgutniveau durch Entzug bzw. Zufuhr von Öl vorgenommen.

Nach einer bevorzugten Ausgestaltung dieser Ausgestaltung soll das Ölbad mit einem vertikal verschiebbaren Ausgleichgefäß verbunden sein, und zwar nach Art der bekannten "kommunizierenden Röhren", so daß sich sowohl im Ölbad als auch im Ausgleichsgefäß selbsttätig das gleiche Ölniveau einstellt. Die Verbindungsleitung muß flexibel ausgebildet sein.

Bei Verschiebung beispielsweise nach unten wird im Ausgleichgefäß unterhalb des bestehenden Ölniveaus das für die Aufnahme von Öl zur Verfügung stehende Volumen vergrößert, d.h. es fließt Öl aus dem Ölbad durch die Verbindungsleitung in das Ausgleichgefäß, wodurch als gewünschtes Ergebnis das Ölniveau im Ölbad sinkt, und zwar solange bis sich in Ölbad und Ausgleichgefäß wieder ein gleiches, aber niedrigeres Ölniveau eingestellt hat.

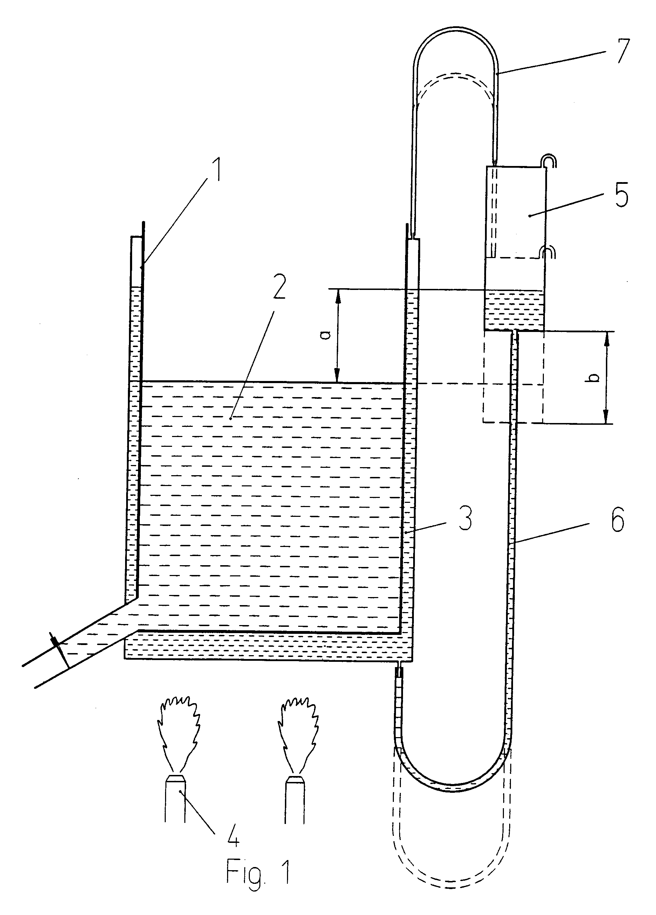

Anhand der einzigen Figur wird der Vorschlag mit dem vertikal verschiebbaren Ausgleichgefäß erläutert:

Das nach oben hin offene Schmelzgefäß 1 mit dem Schmelzgut 2 befindet sich in einem Thermalölbad 3, das durch Brenner 4 beheizt wird. Neben dem Ölbad 3 ist ein Ausgleichgefäß 5 angeordnet, das über eine flexible Ausgleichleitung 6 so mit dem Ölbad 3 verbunden ist, daß sich bei Verschiebung des Ausgleichgefäßes 5 das Thermalölniveau ausgleichen kann. Die Räume oberhalb des Ölspiegels in Ölbad 3 und Ausgleichgefäß 5 sind über eine flexible Gasausgleichleitung 7 verbunden, können aber auch jeder für sich nach oben hin offen, also mit der Atmosphäre verbunden sein.

Dargestellt ist eine Situation nach dem Absenken des Schmelzgutniveaus vor der Anpassung des Ölniveaus. Soll das Ölniveau gesenkt werden, muß das Ausgleichgefäß 5 über eine nicht dargestellte, für den Fachmann ohne weiteres realisierbare Verschiebungseinrichtung nach unten verschoben werden. Bei der Verschiebung nach unten verschiebt sich mit dem Ausgleichgefäß 5 auch der gerade im Ausgleichgefäß 5 bestehende Ölspiegel nach unten, wodurch eine Niveaudifferenz zwischen dem Öl im Ölbad 3 und dem Öl im Ausgleichgefäß entsteht. Diese Differenz bewirkt, daß Öl vom Ölbad 3 über die Ausgleichleitung 6 in das Ausgleichgefäß 5 fließt, d. h. das Ölniveau im Ölbad 3 sinkt und und das relative Ölniveau im Ausgleichgefäß 5 steigt bis sich beide Ölniveaus ausgeglichen haben (gestrichelte Linie).

Der notwendige Verschiebeweg b für den Ausgleichgefäß 5 ist abhängig vom Verhältnis der ölführenden horizontalen Querschnitte in Ölbad 3 und Ausgleichgefäß 5 und der gewünschten Ölniveauabsenkung a im Ölbad 3.

## Patentansprüche

1. Schmelzanlage für themoplastische Stoffe, mit einem zur Aufnahme von Schmelzgut (2) dienenden Schmelzgefäß (1), das von einem Ölbad (3) umgeben ist, **dadurch gekennzeichnet,** daß neben dem Ölbad (3) ein in der Höhe verstellbares Ausgleichgefäß (5) angeordnet ist, dessen unteres Ende über eine flexible Ausgleichleitung (6) mit dem Bodenbereich des Ölbades (3) verbunden ist und dessen oberes Ende über eine flexible Gasausgleichleitung (7) mit dem oberen Ende des Ölbades (3) in Strömungsverbindung steht.

2. Schmelzanlage nach Anspruch 1, **dadurch gekennzeichnet,** daß das obere Ende des Ölbades (3) geschlossen ist.
